# FASCICULE DE BREVET EUROPEEN

(11) **EP 2 456 581 B1**
(45) Date de publication et mention de la délivrance du brevet: **30.07.2014**
(21) Numéro de dépôt: 10737977.8
(22) Date de dépôt: 09.06.2010
(51) Int. Cl.: B23K 33/00, B21K 1/08, F16C 3/10, F16C 3/14

(54) **VILEBREQUIN CREUX ET SON PROCÉDÉ DE FABRICATION**
HOHLE KURBELWELLE UND DEREN HERSTELLUNGSVERFAHREN
HOLLOW CRANKSHAFT AND METHOD OF MANUFACTURING THE SAME

(30) Priorité: 21.07.2009 FR 0955078
(43) Date de publication de la demande: 30.05.2012
(73) Titulaire: Peugeot Citroën Automobiles Société Anonyme, 78140 Vélizy Villacoublay (FR)
(72) Inventeur: MORIN, Jean Yves, F-68260 Kingersheim (FR); MENY, Marc, F-90150 Cunelieres (FR); BLANC, Michel, F-78400 Chatou (FR); FERRON, Bernard, F-91650 Breux-Jouy (FR)
(74) Mandataire: Renous Chan, Véronique
(86) Numéro de dépôt international: PCT/FR2010/051146
(87) Numéro de publication internationale: WO 2011/010027

(56) Documents cités:
- DE-A1- 3 729 992
- DE-A1- 4 437 398
- FR-A- 2 020 149
- FR-A- 2 802 591
- US-A- 1 726 875

## Description

L'invention concerne un vilebrequin creux, un moteur et un véhicule équipé de ce vilebrequin ainsi que le procédé de fabrication d'un tel vilebrequin.

Les vilebrequins qui équipent les moteurs des véhicules actuels sont des pièces généralement fabriquées en une seule pièce par exemple forgées à la presse ou coulées. La matière utilisée telle que la fonte, l'acier est de ce fait présente dans toutes les sections de la pièce ce qui nécessite de réaliser au cours des opérations d'usinage des orifices de passage pour l'huile permettant de lubrifier les paliers et les manetons présents sur le vilebrequin.

Du fait des formes pleines d'un tel vilebrequin, celui-ci présente généralement un poids important qu'il n'est pas possible de réduire sans toucher à la géométrie et aux dimensions des formes extérieures du vilebrequin.

De manière à réduire le poids d'une telle pièce, on a proposé dans FR 2 802 591 de réaliser un vilebrequin mécanosoudé constitué d'un certain nombre d'éléments individuels pourvus de cavités en leur intérieur réduisant ainsi le poids et assemblés les uns aux autres pour constituer le vilebrequin. Les éléments individuels sont ainsi assemblés par des soudures s'étendant transversalement à l'axe du vilebrequin.

On a proposé également de réaliser un vilebrequin à l'aide de deux pièces de tôle embouties puis soudées entre elles avec des joints d'assemblage orientés le long du vilebrequin comme cela est notamment décrit dans FR 2 020 149. L'assemblage des deux pièces peut être réalisé par soudage par résistance sous pression ou il peut également être réalisé par emmanchement des pièces l'une sur l'autre par frettage.

Un tel procédé de fabrication permet donc d'obtenir un vilebrequin creux dans lequel la matière se trouve réduite à celle constituant la paroi extérieure du vilebrequin tandis que la totalité de la section intérieure demeure disponible pour une circulation d'huile, par exemple. On obtient ainsi un gain de poids intéressant. Toutefois, l'assemblage par frettage est relativement complexe à mettre en oeuvre et en outre la résistance d'un vilebrequin ainsi assemblé peut ne pas être suffisante.

On préfère donc des vilebrequins dans lesquels l'assemblage s'effectue par soudage ou brasage des deux pièces assemblées bord à bord selon l'axe longitudinal du vilebrequin. Il est connu de DE 44 37 398 un tel assemblage, les bords jointifs des pièces étant conformés pour définir une rainure.

Toutefois, on a pu s'apercevoir que de tels assemblages ne présentent pas toujours des qualités suffisantes en termes de résistance.

L'invention a donc pour but de réaliser un vilebrequin creux, léger, constitué de deux pièces ou demi-coquilles obtenues par forgeage, et qui, assemblées selon l'axe longitudinal du vilebrequin, définissent une section intérieure creuse dudit vilebrequin permettant une circulation d'huile de lubrification par exemple ainsi qu'un allégement de la pièce, et qui soit de plus capable de transmettre un couple important tout en pouvant être fabriqué de manière relativement simple et économiquement avantageuse.

Aussi, l'invention a pour objet un vilebrequin creux constitué de deux pièces ou demi-coquilles obtenues par forgeage et assemblées par soudage selon l'axe longitudinal du vilebrequin, les bords jointifs des pièces étant conformés pour, lors de l'assemblage bord à bord desdites pièces, définir une rainure destinée à recevoir un cordon de soudure, caractérisé en ce que le bord de l'une des pièces présente en outre un rebord en saillie dans le prolongement de la face interne de ladite pièce, destiné à se loger le long de la face interne de l'autre pièce lors de l'assemblage desdites pièces.

De manière avantageuse, le rebord de l'une des demi-coquilles se trouvant logé derrière la face interne de l'autre demi-coquille et à l'arrière de la rainure, la soudure réalisée au niveau de cette rainure formée par les bords est ainsi renforcée.

En outre, les demi-coquilles sont dimensionnées de sorte qu'il y a un jeu entre les deux pièces lors de l'assemblage bord à bord, ce qui permet d'éviter les contraintes liées à la dilatation de la matière.

Selon une forme de réalisation préférée, les bords jointifs de chaque demi-coquille présente respectivement un chanfrein de sorte que l'assemblage bord à bord des demi-coquilles définit une rainure, en forme de V, ouverte vers l'extérieur du vilebrequin.

Par ailleurs, lors d'un soudage, il existe un risque de formation de calamine avec l'impossibilité d'enlever celle se trouvant à l'intérieur du vilebrequin ainsi formé et qui peut alors se retrouver dans le circuit de lubrification des paliers et manetons.

De manière avantageuse, il est possible lors de la réalisation des deux demi-coquilles constituant le vilebrequin de ménager sur le bord d'au moins l'une des demi-coquilles un évidement qui, lors de l'assemblage bord à bord des deux demi-coquilles forme un passage mettant en communication l'intérieur du vilebrequin ainsi formé et l'extérieur. Au travers de ce passage peut être introduit à l'intérieur du vilebrequin, un gaz de protection notamment de l'azote qui permet d'éviter la formation de calamine lors du soudage. On peut avantageusement prévoir un tel évidement sur le bord de chaque demi-coquille de sorte que les évidements mis en regard lors de l'assemblage des demi-coquilles forment ensemble le passage.

L'invention concerne également un moteur du type à combustion interne tel qu'à 2, 3, 4 ou 6 cylindres par exemple, équipé d'un tel vilebrequin creux ainsi qu'un véhicule comportant un tel moteur.

L'invention concerne également un procédé de fabrication d'un vilebrequin creux dans lequel on assemble bord à bord par soudage selon l'axe longitudinal du vilebrequin deux pièces ou demi-coquilles forgées, les bords jointifs des pièces étant conformés pour définir, lors de l'assemblage, une rainure destinée à recevoir un métal d'apport lors du soudage, caractérisé en ce que le bord de l'une des pièces est en outre conformé pour présenter un rebord destiné à se loger le long de la face interne de l'autre pièce.

Lors de l'estampage des pièces, on réalise en outre sur le bord d'au moins une pièce un évidement, ledit évidement lors de l'assemblage des pièces formant un passage de communication entre l'intérieur du vilebrequin ainsi formé et l'extérieur. On peut prévoir un évidement sur chaque pièce et lors de l'assemblage, la mise en regard desdits évidements forme le passage.

Ainsi, lors de l'opération de soudage des deux demi-coquilles assemblées, on peut injecter dans l'espace intérieur dudit vilebrequin ainsi formé, par l'intermédiaire du passage ménagé entre les bords jointifs des deux demi-coquilles, un gaz inerte de protection tel que de l'azote.

En conséquence, l'invention propose un gain de poids intéressant au niveau du vilebrequin tout en préservant la résistance dudit vilebrequin, à l'aide d'un procédé de fabrication incluant un soudage plus simple et plus facile à mettre en oeuvre et donc économiquement plus avantageux tout en proposant en outre une protection efficace contre la formation de calamine à l'intérieur dudit vilebrequin.

Par ailleurs, pour limiter l'impact des zones creuses du vilebrequin sur la circulation de l'huile au sein dudit vilebrequin on peut également proposer de séparer les zones creuses des passages de l'huile qui sont destinés à la lubrification des paliers et manetons du vilebrequin de manière à ainsi éviter les différents risques et problèmes liés au remplissage par l'huile de ces zones creuses du vilebrequin. Ainsi selon une première forme de réalisation, le vilebrequin creux est muni de moyens de circulation de l'huile tels qu'un tube, mis en place dans l'une des deux demi-coquilles, avant leur assemblage. La section du tube sera choisie en fonction du volume d'huile que l'on souhaite faire circuler et ce tube passera à proximité des zones à lubrifier où un raccord tubulaire reliera par exemple le tube aux paliers et manetons.

Selon une seconde forme de réalisation, on réalise les zones creuses du vilebrequin en dehors des passages d'huile, destinés à la lubrification des paliers et manetons.

Ainsi, il n'est pas nécessaire de prévoir une pompe à huile appropriée pour pallier l'augmentation du volume d'huile. On évite également les risques d'un mauvais équilibrage du vilebrequin en fonctionnement moteur ou les retards de montée en pression de l'huile.

On décrira maintenant l'invention plus en détails en référence au dessin dans lequel :

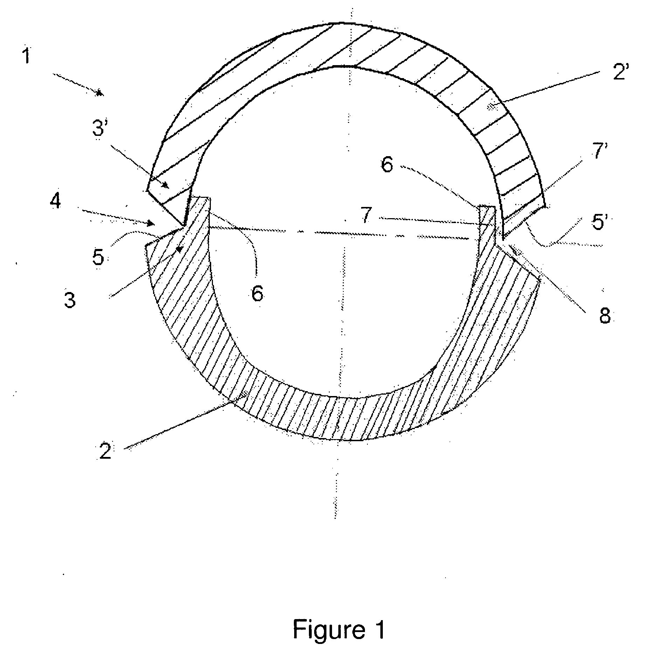

La figure 1 représente une vue en coupe transversale de deux pièces assemblées en vue de constituer un vilebrequin, au niveau de passage de communication entre l'intérieur du vilebrequin et l'extérieur ;

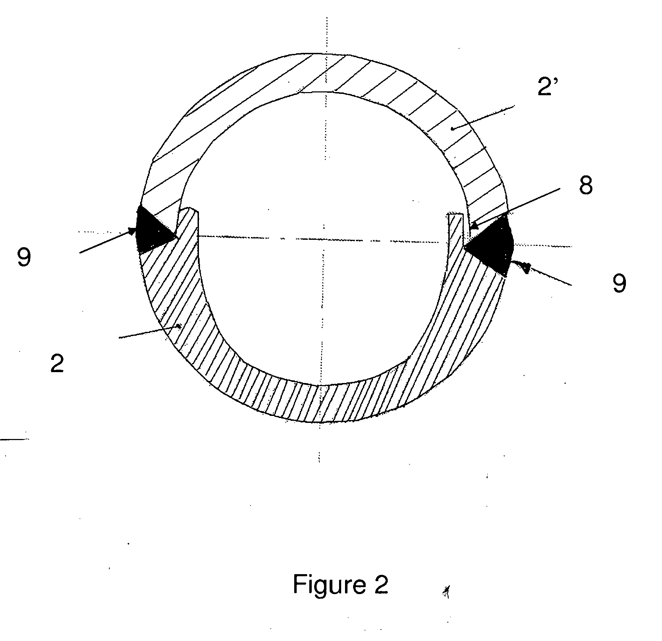

La figure 2 représente une vue en coupe transversale selon la figure 1 une fois le soudage effectué ;

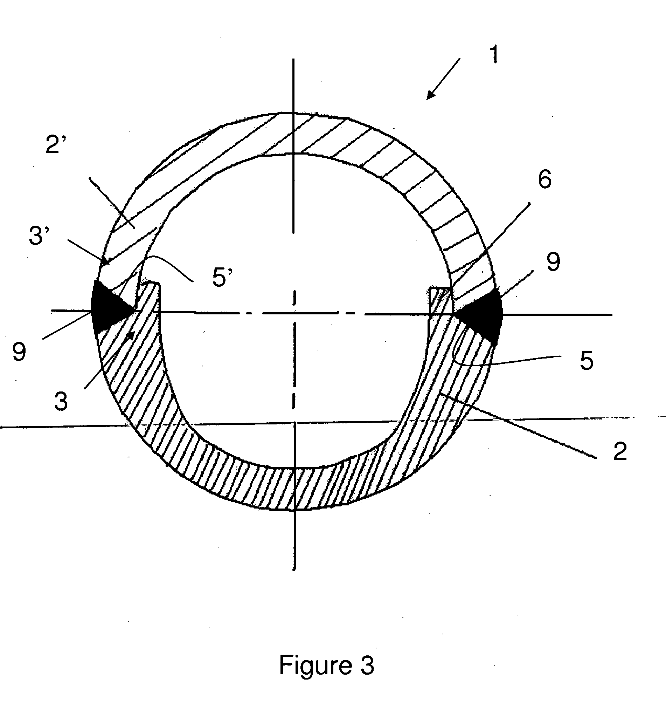

La figure 3 représente une vue en coupe transversale du vilebrequin selon l'invention à un autre emplacement le long du vilebrequin ;
La figure 4 représente une vue en coupe longitudinale d'un vilebrequin creux 2 cylindres selon l'invention ;
La figure 5 représente une vue en coupe longitudinale d'un vilebrequin creux 3 cylindres ;
La figure 6 représente une vue en coupe longitudinale d'un vilebrequin creux 4 cylindres selon un mode de réalisation ; et
La figure 7 représente une vue en coupe longitudinale d'un vilebrequin creux 4 cylindres selon un autre mode de réalisation.

La présente invention concerne un vilebrequin 1 constitué de deux pièces ou demi-coquilles 2, 2' obtenues par estampage. Ainsi, l'acier débité est chauffé par induction pour réaliser l'estampage d'une première demi-coquille 2. Cette demi-coquille 2 subit ensuite un ébarbage et un calibrage. Puis, on effectue une étape de refroidissement contrôlé avant de grenailler ladite demi-coquille 2. On entreprend ensuite une étape de contrôle de l'aspect de cette demi-coquille 2 avant de la soumettre à un contrôle dimensionnel et magnétoscopique.

La seconde demi-coquille 2' est réalisée selon les mêmes étapes de traitement.

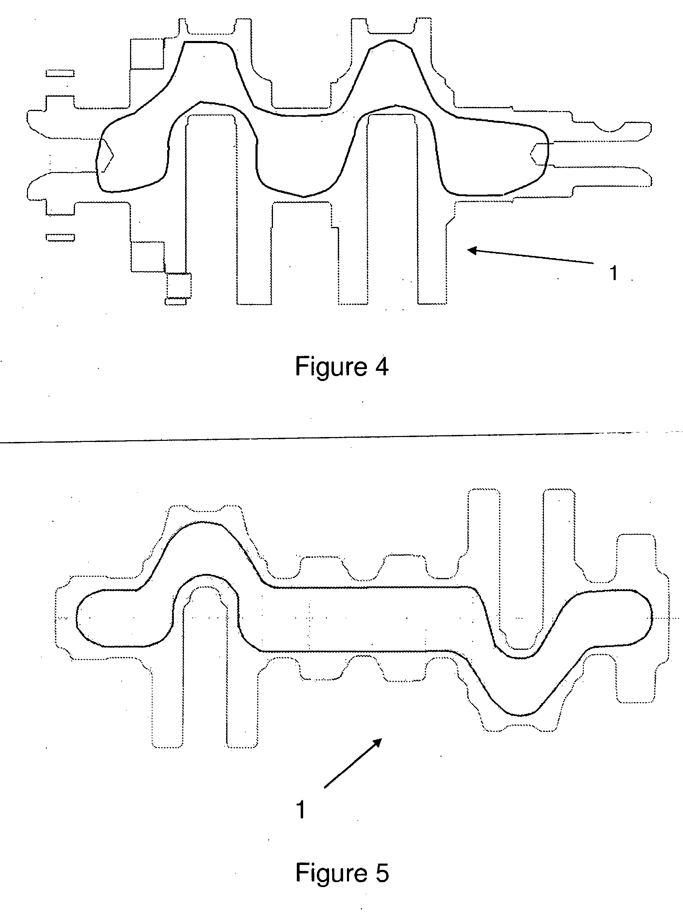

Pour des vilebrequins 2 ou 3 cylindres tels que représentés aux figures 4 et 5, il est possible d'estamper les deux demi-coquilles 2, 2' avec un plan de joint plat dans un même coup de presse grâce à une implantation bout à bout. Toutefois, pour les vilebrequins de moteur à 3 ou 6 cylindres par exemple se posent toujours la problématique du décalage angulaire entre les manetons et contrepoids. Les vilebrequins destinés à des moteurs 3 ou 6 cylindres peuvent alors être estampés avec des plans de joints brisés. On peut également envisager de réaliser ces vilebrequins avec deux demi-coquilles avec un plan de joint plat, la pièce obtenue subissant ensuite un traitement permettant d'obtenir le décalage angulaire voulu entre les manetons et contrepoids.

Une fois les deux demi-coquilles 2, 2' fabriquées, elles sont assemblées bord à bord. Les bords 3, 3' jointifs de chaque demi-coquille 2, 2' sont conformés pour définir lors de la mise bord à bord une rainure 4 ouverte vers l'extérieur du vilebrequin 1. Cette rainure 4 présente de préférence une forme de V. On peut envisager également que la conformation des bords 3, 3' de chaque pièce 2, 2' est telle que la rainure 4 présente une forme en U par exemple.

Le bord 3, 3' de chaque pièce 2, 2' est donc conformé lors de l'estampage de manière à présenter un chanfrein 5, 5' de l'extérieur vers l'intérieur de la demi-coquille et la mise bord à bord forme ainsi un rainure 4 en V ouverte vers l'extérieur du vilebrequin 1.

En outre, l'une 2 des pièces 2, 2' présente une paroi au moins au niveau du bord 3 plus épaisse que celle de la pièce 2' de sorte que la section intérieure de la demi-pièce 2 est inférieure celle de la pièce 2.

Cette épaisseur du bord 3 permet de ménager lors de l'estampage à la fois un chanfrein 5 propre à former la rainure 4, et un rebord 6 en saillie de la face interne de la demi-coquille 2. Ainsi, lors de la mise bord à bord des demi-coquilles 2, 2', le rebord 6 se loge derrière la face interne de la demi-coquille 2'. Ainsi, le rebord 6 de la pièce 2 s'emboîte dans la pièce 2'. Les demi-coquilles 2, 2' sont dimensionnées de sorte qu'il y a un jeu entre les deux pièces lors de l'assemblage bord à bord, en particulier au niveau du rebord de l'une des demi-coquilles et de la face interne de l'autre, ce qui permet d'éviter les contraintes liées à la dilatation de la matière.

De plus, chaque demi-coquille 2, 2' présente à un emplacement déterminé un évidement 7, 7'. Ces évidements 7, 7', mis en regard l'un de l'autre lors de l'assemblage bord à bord des deux demi-coquilles 2, 2', forment un passage 8 mettant en communication l'intérieur du vilebrequin 1 et l'extérieur. Au travers de ce passage 8 peut être introduit à l'intérieur du vilebrequin 1, un gaz de protection notamment de l'azote qui permet d'éviter la formation de calamine lors du soudage.

Une fois, les deux demi-coquilles 2, 2' assemblées bord à bord et l'intérieur du vilebrequin 1 mis sous protection gazeuse, on réalise le soudage des deux demi-coquilles par apport de métal au niveau de la rainure 5, pour former un cordon de soudure 9. Ce soudage peut être réalisé à l'aide d'un robot programmé d'après le profil des deux demi-coquilles 2, 2'.

Le passage 8 est soudé en dernier et le gaz de protection qui aura été emprisonné à l'intérieur du vilebrequin 1 pourra s'échapper lors du perçage des trous de passage d'huile destinés à la lubrification des paliers et manetons et qui seront réalisés plus tard.

Une fois le soudage effectué, on ébarbe le bourrelet extérieur du vilebrequin soudé qui ne présente pas de bourrelet intérieur, puis on laisse refroidir à l'air ambiant et on effectue les différents contrôles de la pièce à savoir les contrôles aspect, dimensionnel et magnétoscopique.

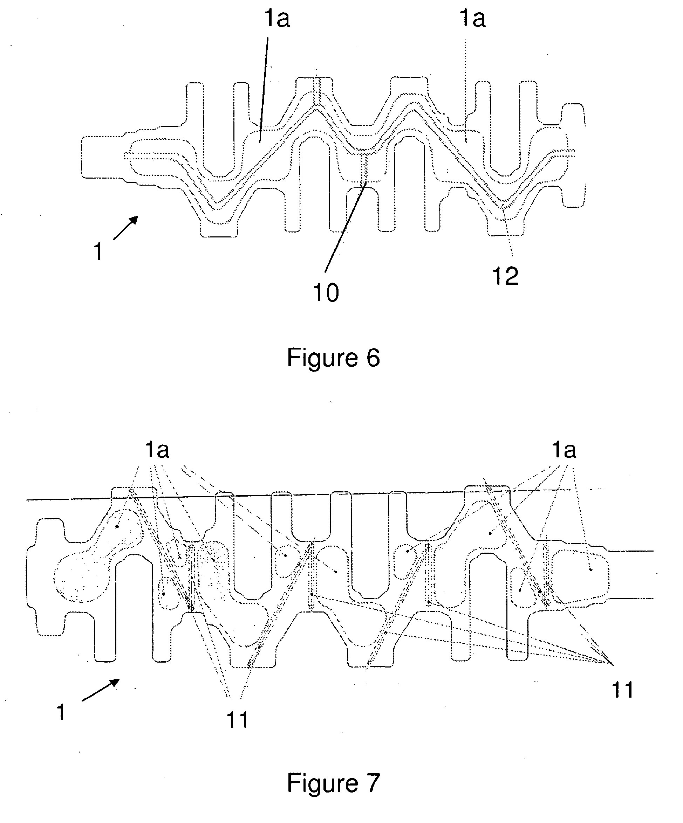

A la figure 6 est représenté un mode de réalisation d'un vilebrequin 1, 4 cylindres selon l'invention dans lequel on a mis en place un tube 12 de passage de l'huile de lubrification des paliers et manetons dudit vilebrequin 1. Des raccords tubulaires 10 sont prévus pour relier les paliers et manetons au tube 12. On évite ainsi que de l'huile ne se retrouve dans les zones creuses 1 a du vilebrequin 1.

En variante, on prévoit que les zones creuses 1 a sont réalisées en dehors des passages d'huile 11 comme on peut le voir sur la figure 7.

## Revendications

1. Vilebrequin (1) creux constitué de deux pièces ou demi-coquilles (2, 2') obtenues par forgeage et assemblées par soudage selon l'axe longitudinal du vilebrequin (1), les bords (3, 3') jointifs des pièces (2, 2') étant conformés pour, lors de l'assemblage bord à bord desdites pièces (2, 2'), définir une rainure (4) destinée à recevoir un métal d'apport lors du soudage, **caractérisé en ce que** le bord (3) de l'une (2) des pièces (2, 2') présente en outre un rebord (6) en saillie dans le prolongement de la face interne de ladite pièce (2), destiné à se loger le long de la face interne de l'autre pièce (2') lors de l'assemblage desdites pièces (2, 2').

2. Vilebrequin (1) selon la revendication 1, **caractérisé en ce que** les bords (3, 3)' jointifs de chaque demi-coquille (2, 2') présente respectivement un chanfrein (5, 5') de sorte que l'assemblage bord à bord des demi-coquilles (2, 2') définit la rainure (4) en forme de V, ouverte vers l'extérieur du vilebrequin 1.

3. Vilebrequin (1) selon l'une des revendications 1 et 2, **caractérisé en ce que** le bord (3) d'au moins l'une des demi-coquilles (2) comporte un évidement (7), ledit évidement (7) lors de l'assemblage bord à bord des deux demi-coquilles (2, 2') formant un passage (8) mettant en communication l'intérieur du vilebrequin ainsi formé et l'extérieur.

4. Vilebrequin (1) selon l'une des revendications 1 à 3, **caractérisé en ce que** le vilebrequin (1) creux est muni de moyens de circulation de l'huile tels qu'un tube.

5. Vilebrequin (1) selon l'une des revendications 1 à 3, **caractérisé en ce que** les zones creuses du vilebrequin sont ménagées en dehors des passages d'huile, destinés à la lubrification des paliers et manetons.

6. Procédé de fabrication d'un vilebrequin (1) creux dans lequel on assemble bord à bord par soudage selon l'axe longitudinal du vilebrequin (1) deux pièces ou demi-coquilles (2, 2') forgées, les bords (3, 3') jointifs des pièces (2, 2') étant conformés pour définir, lors de l'assemblage, une rainure (4) destinée à recevoir un métal d'apport lors du soudage, **caractérisé en ce que** le bord (3) de l'une (2) des pièces (2, 2 ') est en outre conformé pour présenter un rebord (6) destiné à se loger le long de la face interne de l'autre pièce (2').

7. Procédé selon la revendication 6, **caractérisé en ce que** le forgeage consiste en une étape d'estampage.

8. Procédé selon la revendication 7, **caractérisé en ce que**, lors de l'estampage des pièces (2, 2'), on réalise en outre sur le bord (3, 3') de chaque pièce (2, 2') un évidement (7, 7'); lesdits évidements (7, 7') en regard l'un de l'autre lors de l'assemblage des pièces (2, 2') formant un passage (8) de communication entre l'intérieur du vilebrequin (1) ainsi formé et l'extérieur et, lors de l'opération de soudage des deux demi-coquilles (2, 2') assemblées, on injecte dans l'espace intérieur dudit vilebrequin (1) ainsi formé, par l'intermédiaire du passage (8) un gaz inerte de protection tel que de l'azote.

9. Moteur notamment pour véhicule automobile, **caractérisé en ce qu'**il comporte un vilebrequin selon l'une des revendications 1 à 5.

10. Véhicule automobile **caractérisé en ce qu'**il comporte un moteur selon la revendication 9.

## Patentansprüche

1. Hohle Kurbelwelle (1), die aus zwei Teilen oder Halbschalen (2, 2') besteht, die durch Schmieden erzielt werden und durch Schweißen entlang der Längsachse der Kurbelwelle (1) zusammengefügt werden, wobei die Fügeränder (3, 3') der Teile (2, 2') ausgebildet sind, um beim Rand-an-Rand-Fügen der zwei Teile (2, 2') eine Rille (4) zu definieren, die dazu bestimmt ist, einen Schweißzusatzstoff beim Schweißen aufzunehmen, **dadurch gekennzeichnet, dass** der Rand (3) eines (2) der Teile (2, 2') außerdem eine Leiste (6), die in der Verlängerung der Innenseite des Teils (2) vorsteht, die dazu bestimmt ist, sich entlang der Innenseite des anderen Teils (2') beim Fügen der Teile (2, 2') einzufügen, aufweist.

2. Kurbelwelle (1) nach Anspruch 1, **dadurch gekennzeichnet, dass** die Fügeränder (3, 3') jeder Halbschale (2, 2') jeweils eine Abfasung (5, 5') derart aufweisen, dass das Rand-an-Rand-Fügen der Halbschalen (2, 2') die Rille (4) in V-Form, die zur Außenseite der Kurbelwelle 1 offen ist, definiert.

3. Kurbelwelle (1) nach einem der Ansprüche 1 und 2, **dadurch gekennzeichnet, dass** der Rand (3) mindestens einer der Halbschalen (2) eine Ausnehmung (7) aufweist, wobei die Ausnehmung (7) beim Rand-an-Rand-Fügen anhand der zwei Halbschalen (2, 2') eine Passage (8) bildet, die das so geformte Innere der Kurbelwelle mit der Außenseite verbindet.

4. Kurbelwelle (1) nach einem der Ansprüche 1 bis 3, **dadurch gekennzeichnet, dass** die hohle Kurbelwelle (1) mit Ölzirkulationsmitteln, wie zum Beispiel einer Röhre, versehen ist.

5. Kurbelwelle (1) nach einem der Ansprüche 1 bis 3, **dadurch gekennzeichnet, dass** die hohlen Bereiche der Kurbelwelle außerhalb der Ölpassagen, die zur Schmierung der Lager und Zapfen bestimmt sind, eingerichtet sind.

6. Herstellungsverfahren einer hohlen Kurbelwelle (1), bei dem man durch Schweißen entlang der Längsachse der Kurbelwelle (1) zwei Teile oder geschmiedete Halbschalen (2, 2') Rand an Rand zusammenfügt, wobei die Fügeränder (3, 3') der Teile (2, 2') ausgebildet sind, um beim Fügen eine Rille (4) zu definieren, die dazu bestimmt ist, beim Schweißen einen Schweißzusatzstoff aufzunehmen, **dadurch gekennzeichnet, dass** der Rand (3) eines (2) der Teile (2, 2') außerdem ausgebildet ist, um eine Leiste (6) aufzuweisen, die dazu bestimmt ist, sich entlang der Innenseite des anderen Teils (2') einzufügen.

7. Verfahren nach Anspruch 6, **dadurch gekennzeichnet, dass** das Schmieden aus einem Gesenkschmiedeschritt besteht.

8. Verfahren nach Anspruch 7, **dadurch gekennzeichnet, dass** man beim Gesenkschmieden der Teile (2, 2') außerdem auf dem Rand (3, 3') jedes Teils (2, 2') eine Ausnehmung (7, 7') ausführt, wobei die Ausnehmungen (7, 7') einander gegenüber beim Fügen der Teile (2, 2') eine Verbindungspassage (8) zwischen dem Inneren der so geformten Kurbelwelle (1) und der Außenseite bilden, und man beim Schmiedevorgang der zwei gefügten Halbschalen (2, 2') in den Innenraum der so geformten Kurbelwelle (1) über die Passage (8) ein Schutzgas, wie zum Beispiel Stickstoff, einspritzt.

9. Motor, insbesondere für Kraftfahrzeug, **dadurch gekennzeichnet, dass** er eine Kurbelwelle nach einem der Ansprüche 1 bis 5 aufweist.

10. Kraftfahrzeug, **dadurch gekennzeichnet, dass** es einen Motor nach Anspruch 9 aufweist.

## Claims

1. A hollow crankshaft (1) constituted by two parts or half-shells (2, 2') obtained by forging and assembled by welding along the longitudinal axis of the crankshaft (1), the contiguous edges (3, 3') of the parts (2, 2') being shaped to define, on assembly edge to edge of the said parts (2, 2'), a groove (4) intended to receive a filler metal during welding, **characterized in that** the edge (3) of one (2) of the parts (2, 2') has in addition a rim (6) projecting in the extension of the internal face of the said part (2), intended to be housed along the internal face of the other part (2') during the assembly of the said parts (2, 2).

2. The crankshaft (1) according to Claim 1, **characterized in that** the contiguous edges (3, 3') of each half-shell (2, 2') have respectively a chamfer (5, 5') such that the edge to edge assembly of the half-shells (2, 2') defines the groove (4) in a V-shape, open towards the exterior of the crankshaft (1).

3. The crankshaft (1) according to one of Claims 1 and 2, **characterized in that** the edge (3) of at least one of the half-shells (2) comprises a recess (7), the said recess (7) forming, during the edge to edge assembly of the two half-shells (2, 2'), a passage (8) placing into communication the interior of the crankshaft thus formed and the exterior.

4. The crankshaft (1) according to one of Claims 1 to 3, **characterized in that** the hollow crankshaft (1) is provided with means for circulation of oil, such as a tube.

5. The crankshaft (1) according to one of Claims 1 to 3, **characterized in that** the hollow zones of the crankshaft are arranged outside the oil passages, intended for the lubrication of the bearings and crankpins.

6. A method for the manufacturing of a hollow crankshaft (1) in which two forged parts or half-shells (2, 2') are assembled edge to edge by welding along the longitudinal axis of the crankshaft (1), the contiguous edges (3, 3') of the parts (2, 2') being shaped to define, during assembly, a groove (4) intended to receive a filler metal during welding, **characterized in that** the edge (3) of one (2) of the parts (2, 2') is, in addition, shaped to have a rim (6) intended to be housed along the internal face of the other part (2').

7. The method according to Claim 6, **characterized in that** the forging consists of a stamping phase.

8. The method according to Claim 7, **characterized in that**, during the stamping of the parts (2, 2'), in addition a recess (7, 7') is realized on the edge (3, 3') of each part (2, 2'), the said recesses (7, 7') opposite one another during the assembly of the parts (2, 2') forming a communication passage (8) between the interior of the crankshaft (1) thus formed and the exterior and, during the welding operation of the two assembled half-shells (2, 2'), an inert shielding gas, such as nitrogen, is injected in the interior space of the crankshaft (1) thus formed, via the passage (8).

9. An engine, in particular for a motor vehicle, **characterized in that** it comprises a crankshaft according to one of Claims 1 to 5.

10. A motor vehicle, **characterized in that** it comprises an engine according to Claim 9.
